# EUROPEAN PATENT APPLICATION

(11) **EP 2 254 235 A1**
(43) Date of publication of application: **24.11.2010**
(21) Application number: 09720277.4
(22) Date of filing: 10.03.2009
(51) Int. Cl.: H02P 6/12

(54) **BRUSHLESS DC MOTOR DRIVER**

(30) Priority: 11.03.2008 JP 2008061574
(71) Applicant: Panasonic Electric Works Co., Ltd, Kadoma-shi Osaka 571-8686 (JP)
(72) Inventor: UEDA, Hidetoshi, Kadoma-shi Osaka 571-8686 (JP)
(74) Representative: Appelt, Christian W.
(86) International application number: PCT/JP2009/054529
(87) International publication number: WO 2009/113531

(57) **Abstract**

A brushless DC motor driver has a DC-AC converter circuit, a detection circuit, a comparison circuit and a control circuit. The DC-AC converter circuit has switching elements. The detection circuit is configured to detect an electric current flowing through a motor coil of a brushless DC motor. The comparison circuit is configured to, if the electric current reaches or exceeds an over-current threshold, generate an over-current detection signal. The control circuit is configured to unenergize the switching elements for a first breaking time if the detection circuit generates the over-current detection signal in a start phase. The control circuit is also configured to unenergize the switching elements for a second breaking time longer than the first breaking time if the detection circuit generates the over-current detection signal in a steady phase.

## Description

### TECHNICAL FIELD

The invention relates generally to brushless DC motor drivers and, more particularly, to a brushless DC motor driver capable of effectively lowering each temperature of switching elements exposed to an over-current in a steady phase.

### BACKGROUND ART

For example, Japanese Patent Application Publication No. H09-294392 published on November 11, 1997 discloses a brushless motor driving system. This system includes a capacitor and a soft start circuit. The capacitor is used to decrease a sudden high voltage in a start phase. The soft start circuit is configured to decrease each ON duty of switching elements so that an electric current in a start phase becomes equal to or less than an over-current threshold (a current restriction level). In the system, one over-current threshold that can be lowered is used, and accordingly it is possible to reduce the heat generated on switching elements, caused by an over-current in a steady phase. However, in the steady phase, each temperature of the switching elements exposed to the over-current cannot be effectively lowered by only one over-current threshold.

Japanese Patent Application Publication No. H10-080178 published on March 24, 1998 discloses a DC blushless motor driving circuit. This circuit uses a variable setting value that corresponds to a certain actual measurement value (an over-current threshold). For example, the variable setting value is increased at a constant ratio from 0.8 A at 0 rpm to 1.7 A at 1030 rpm, but it corresponds to the over-current threshold of 1.7A in the range from 0 rpm to 1030 rpm. Thus, by using a variable setting value corresponding to the number of rotations of the motor, an electric current flowing through a winding of the motor (a motor coil) can be restricted by a constant over-current threshold. However, since multiple thresholds (setting values) are used, the driving circuit requires a complicated circuit (e.g., CPU, encoder, etc.). Also in the steady phase, each temperature of the switching elements exposed to an over-current cannot be effectively lowered even by the multiple thresholds.

### DISCLOSURE OF THE INVENTION

It is an object of the present invention to effectively lower each temperature of switching elements exposed to an over-current in a steady phase.

A brushless DC motor driver of the present invention comprises a DC-AC converter circuit, a control circuit, a detection circuit and a comparison circuit, and is used for a brushless DC motor comprising a motor coil. The DC-AC converter circuit comprises switching elements that are arranged so as to be energized from a DC power supply to convert DC voltage into AC voltage. The control circuit is configured to perform switching control of the DC-AC converter circuit to supply the motor coil with the AC voltage for driving the brushless DC motor. The detection circuit is configured to detect an electric current flowing through the motor coil. The comparison circuit is configured to generate an over-current detection signal if the electric current detected through the detection circuit reaches or exceeds an over-current threshold. The control circuit is configured to turn all or part of the switching elements off to unenergize them for a predetermined time if the comparison circuit generates the over-current detection signal. In an aspect of the invention, the control circuit is configured: to unenergize the switching elements for a first breaking time if the electric current detected through the detection circuit in a start phase reaches or exceeds the over-current threshold; and also to unenergize the switching elements for a second breaking time longer than the first breaking time if the electric current detected through the detection circuit in a steady phase reaches or exceeds the over-current threshold.

In this invention, if an electric current detected through the detection circuit in a start phase reaches or exceeds the over-current threshold, the control circuit unenergizes the switching elements for the first breaking time. If the switching elements are exposed to an over-current in a steady phase, the control circuit unenergizes the switching elements for the second breaking time longer than the first breaking time. Accordingly, it is possible to effectively lower each temperature of switching elements exposed to an over-current in the steady phase.

In an embodiment, the comparison circuit is configured to generate the over-current detection signal while the electric current detected through the detection circuit reaches or exceeds the over-current threshold. The control circuit is configured to unenergize the switching elements for the first breaking time from the end of the over-current detection signal. The comparison circuit further comprises a holding circuit and a delay circuit. The holding circuit is configured to hold the output of the comparison circuit so that the comparison circuit continues generating the over-current detection signal for a holding time irrespective of an electric current detected through the detection circuit if the comparison circuit generates the over-current detection signal in the steady phase. The holding time constitutes the second breaking time in combination with the first breaking time. The delay circuit is configured to delay the operation of the holding circuit up to the end of a predetermined delay time from the start of the brushless DC motor.

In this embodiment, only by providing the comparison circuit with the holding circuit and the delay circuit, each temperature of the switching elements exposed to an over-current can be effectively lowered.

In an embodiment, the brushless DC motor further comprises a magnet rotor having magnetic poles. The control circuit further comprises a magnetic sensor, first and second drive elements, and first and second delay circuits. The magnetic sensor is configured to generate a rectangular wave signal in response to rotation of the magnet rotor. The first and second drive elements are arranged so as to alternately turn on and off first and second switching elements of the switching elements in the DC-AC converter circuit in response to the rectangular wave signal. The first and second delay circuits are configured to delay turn-on of the first and second switching elements through the first and second drive elements for the first breaking time, respectively irrespective of an electric current detected through the detection circuit.

In an embodiment, the DC-AC converter circuit and the detection circuit are connected in series between positive and negative terminals of the DC power supply. The detection circuit comprises a current detection resistor. The detection circuit is configured to detect an electric current flowing through the motor coil with the current detection resistor to generate a detection voltage. The comparison circuit comprises an operational amplifier that has first and second input terminals and an output terminal. The operational amplifier is configured to receive the detection voltage and a reference voltage as the over-current threshold via the first and second input terminals, respectively to compare the detection voltage with the over-current threshold. The holding circuit comprises a first resistor, a second resistor and a capacitor. The first resistor is connected between the first input terminal of the operational amplifier and the negative terminal of the DC power supply. The second resistor has first and second ends, and the first end is connected to the first input terminal. The capacitor is connected between the second end of the second resistor and the output terminal of the operational amplifier. The delay circuit of the comparison circuit comprises a delay switch connected between the second end of the second resistor and the negative terminal of the DC power supply, and is configured to turn the delay switch on up to the end of the delay time from the start of the brushless DC motor and to subsequently turn the delay switch off.

### BRIEF DESCRIPTION OF THE DRAWINGS

Preferred embodiments of the invention will now be described in further details. Other features and advantages of the present invention will become better understood with regard to the following detailed description and accompanying drawings where:
FIG. 1 is a schematic diagram of a brushless DC motor driver, in accordance with an embodiment of the present invention;
FIG. 2 illustrates a concrete example of the driver;
FIG. 3 illustrates operation of the driver in a steady phase.
FIG. 4 illustrates operation of the driver in a start phase; and
FIG. 5 illustrates the driver's operation for countermeasure against overload in a steady phase.

### BEST MODE FOR CARRYING OUT THE INVENTION

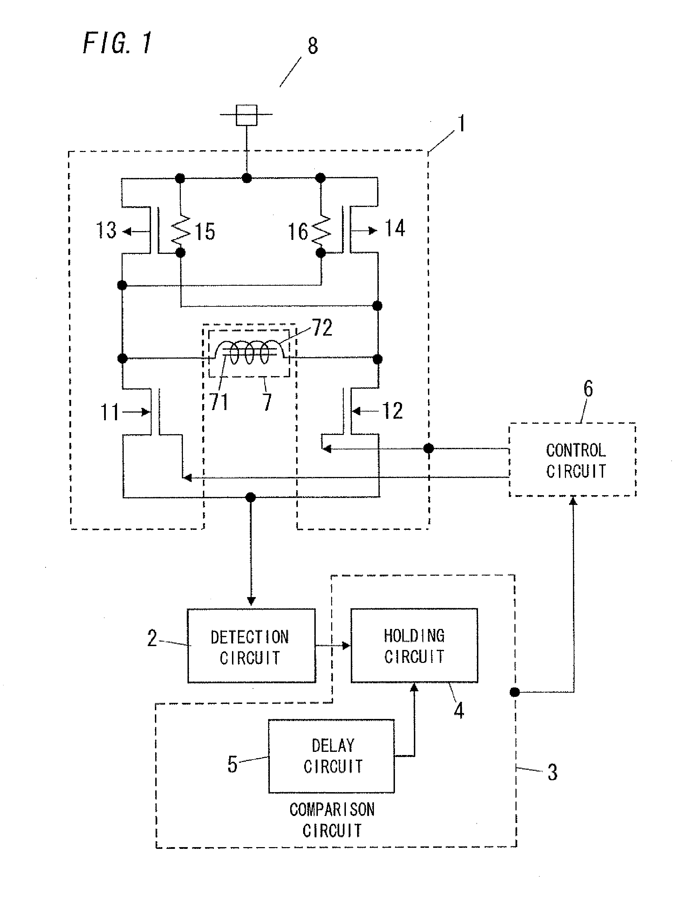

FIG. 1 shows a brushless DC motor driver, in accordance with an embodiment of the present invention. This driver includes a DC-AC converter circuit 1, a detection circuit 2, a comparison circuit 3 and a control circuit 6, and is used for e.g., a single-phase full-wave type of brushless DC motor 7 in a liquid supply device such as a fuel cell device, a heat pump device or the like. However, not limited to this, the brushless DC motor driver of the present invention can be applied to various brushless DC motors such as three-phase full-wave type of brushless DC motors and so on.

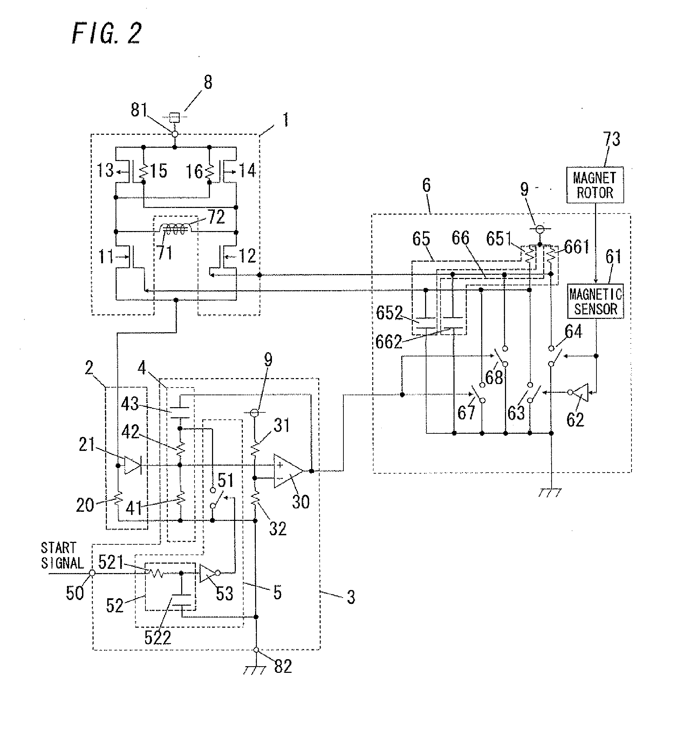

As shown in FIG. 2, the brushless DC motor 7 includes a stator core 71, a motor coil 72 and a magnet rotor 73. The motor coil 72 is wound on the stator core 71. The magnet rotor 73 has magnetic poles (not shown), and is rotatably supported so that each magnetic pole surface faces the stator core 71.

The DC-AC converter circuit 1 and the detection circuit 2 (specifically, a current detection resistor 20 to be described) are connected in series between the positive and negative terminals 81 and 82 of a DC power supply 8.

The DC-AC converter circuit 1 includes switching elements arranged so as to convert DC voltage from the DC power supply 8 into AC voltage, and is connected to the positive terminal side of the DC power supply 8. For example, the DC-AC converter circuit 1 has switching elements 11-14 constituting an H bridge circuit, and resistors 15 and 16.

Each of the switching elements 11 and 12 (first and second switching elements) is an N channel FET, and each of the switching elements 13 and 14 is a P channel FET. The source terminals of the FETs 13 and 14 are connected to the positive terminal 81 of the DC power supply 8, while their drain terminals are connected to the drain terminals of the FETs 11 and 12, respectively. The source terminals of the FETs 11 and 12 are connected to the negative terminal 82 of the DC power supply 8 through the detection circuit 2 (the current detection resistor 20). In an example, the switching elements 11-14 may be bipolar transistors (e.g., NPN and PNP transistors).

The gate terminal of the FET 13 is connected to the positive terminal 81 of the DC power supply 8 through the resistor 15, and also directly connected to the drain terminal of the FET 12. The gate terminal of the FET 14 is connected to the positive terminal 81 of the DC power supply 8 through the resistor 16, and also directly connected to the drain terminal of the FET 11. The motor coil 72 has first and second ends that are connected to the junction of the FETs 11 and 13 and the junction of the FETs 12 and 14, respectively. In an example, the gate terminal of the FET 13 may be connected to the drain terminal of the FET 12 through a resistor or a diode, and the gate terminal of the FET 14 may be also connected to the drain terminal of the FET 11 through a resistor or a diode.

The detection circuit 2 is configured to detect an electric current flowing through the motor coil 72. In the embodiment, the detection circuit 2 is configured to detect an electric current flowing through the motor coil 2 and the FET 11 or the FET 12. For example, the detection circuit 2 has the current detection resistor 20 and a diode 21 that are located between the DC-AC converter circuit 1 and the negative terminal 82 of the DC power supply 8 so as to detect an electric current flowing through the motor coil 72 to generate a detection voltage (a current detection value). Concretely, the current detection resistor 20 is connected between the DC-AC converter circuit 1 and the negative terminal 82 of the DC power supply 8. The anode of the diode 21 is connected to the junction of the DC-AC converter circuit 1 and the current detection resistor 20. The cathode of the diode 21 is connected with the comparison circuit 3.

The comparison circuit 3 is configured to generate an over-current detection signal if the electric current detected through the detection circuit 2 reaches or exceeds an over-current threshold. In the example of FIG. 2, the comparison circuit 3 is configured to generate an over-current detection signal while the electric current detected through the detection circuit 2 reaches or exceeds the over-current threshold.

That is, the comparison circuit 3 is formed of the resistors 31 and 32 and an operational amplifier 30. The resistors 31 and 32 are connected between the control power supply 9 and ground (earth) so as to divide the voltage of the control power supply 9 to generate a reference voltage, namely the over-current threshold. In the example of FIG. 2, the ground is the negative terminal 82 of the DC power supply 8. The over-current threshold is supplied to the inverting input terminal (a second input terminal) of the operational amplifier 30, and the non-inverting input terminal (a first input terminal) of the amplifier 30 is connected with the cathode of the diode 21. Accordingly, the operational amplifier 30 is configured to receive the detection voltage and the over-current threshold via the non-inverting and inverting input terminals, respectively to compare the detection voltage with the over-current threshold. More specifically, the operational amplifier 30 generates a HIGH signal, i.e., an over-current detection signal if the detection voltage reaches or exceeds the over-current threshold, and otherwise generates a LOW signal. The HIGH and LOW signals are supplied to the control circuit 6 (and a capacitor 43 to be described). Herein, the voltage obtained by subtracting an ON voltage of the diode 21 from the voltage across the current detection resistor 20 is supplied as a detection voltage to the non-inverting input terminal of the operational amplifier 30. Accordingly, the over-current threshold is decided by the same voltage as the detection voltage (an input voltage of the non-inverting input terminal) when a desired over-current flows through the current detection resistor 20. In other words, the voltage of the control power supply 9 and the resistors 31 and 32 are set based on a desired over-current. In an example, the comparison circuit 3 is not limited to the amplifier (the operational amplifier 30), but may be formed of a comparator and a pull-up resistor.

The control circuit 6 is configured to control switching of the DC-AC converter circuit 1 to supply the motor coil 42 with AC voltage (a rectangular wave voltage) for driving the motor 7. For example, the control circuit 6 includes a magnetic sensor 61, a NOT circuit 62, switches 63 and 64 (first and second drive elements), and RC circuits 65 and 66 (first and second delay circuits).

The magnetic sensor 61 is located in the proximity of the magnet rotor 73 and configured to generate a rectangular wave signal in response to the rotation of the magnet rotor 73 (positions of magnetic poles). For example, a hall IC comprising a hall device (a hall effect device) may be used as the magnetic sensor 61. The rectangular wave signal is fed to the switch 63 through the NOT circuit 62, and also fed directly to the switch 64. The switches 63 and 64 are a bipolar transistor, an FET or the like each, and arranged to alternately turn the FETs 11 and 12 on and off in response to rectangular wave signals fed to their control terminals (e.g., base or gate terminals). That is, the switch 63 is connected between the gate terminal of the FET 11 and ground, while the switch 64 is connected between the gate terminal of the FET 12 and ground. Accordingly, a gate terminal of an FET 11 or 12 is directly connected to ground if a switch 63 or 64 is turned on, respectively.

The RC circuits 65 and 66 are configured to delay the turn-on of the FETs 11 and 12 through the switches 63 and 64 for a first breaking time, respectively irrespective of an electric current detected through the detection circuit 2. In the example of FIG. 2, the RC circuit 65 is formed of a resistor 651 connected between the control power supply 9 and the junction of the gate terminal of the FET 11 and the switch 63, and a capacitor 652 connected between the junction and ground. Similarly, the RC circuit 66 is formed of a resistor 661 connected between the control power supply 9 and the junction of the gate terminal of the FET 12 and the switch 64, and a capacitor 662 connected between the junction and ground. Accordingly, when the switch 63 is turned off, on timing of the FET 11 is delayed until the voltage across the capacitor 652 reaches the threshold voltage of the FET 11 by the time constant of the RC circuit 65. Similarly, when the switch 64 is turned off, on timing of the FET 12 is delayed until the voltage across the capacitor 662 reaches the threshold voltage of the FET 12 by the time constant of the RC circuit 66. That is, the first breaking time is decided by each time constant of the RC circuits 65 and 66. In other words, each time constant of the RC circuits 65 and 66 is set based on the first breaking time. For example, the first breaking time is decided as is conventionally done, and each time constant of the RC circuits 65 and 66 is set based on the decided first breaking time.

The control circuit 6 is also configured to turn all or part of the switching elements 11-14 off to unenergize the switching elements 11-14 for a predetermined time (a first or second breaking time) if the comparison circuit 3 generates an over-current detection signal. In the embodiment, the control circuit 6 further includes switches 67 and 68 (first and second breaking elements), and is configured to substantially turn the switching elements 11-14 off. In an example, the control circuit 6 may be configured to turn the switching elements 11 and 12 off.

Each of the switches 67 and 68 is a bipolar transistor, an FET or the like. The switch 67 is arranged so as to be turned on in response to the over-current detection signal (HIGH signal) fed to its own control terminal (e.g., a base or gate terminal) to turn the FET 11 off. That is, the switch 67 is connected between the junction of the gate terminal of the FET 11 and the switch 63 and ground so that the gate terminal of the FET 11 can be directly connected to ground. The switch 68 is arranged so as to be turned on in response to an over-current detection signal from the comparison circuit 3 to turn the FET 12 off. That is, the switch 68 is connected between ground and the junction of the gate terminal of the FET 12 and the switch 64 so that the gate terminal of the FET 12 can be directly connected to ground. Each of the switches 67 and 68 is also turned off in response to a LOW signal from the comparison circuit 3. Thus, the control circuit 6 is configured to turn the FETs 11-14 off to unenergize them for a first breaking time from the end of an over-current detection signal (the trailing edge of a HIGH signal).

According to an aspect of the present invention, the comparison circuit 3 further includes a holding circuit 4 and a delay circuit 5. The holding circuit 4 is configured to hold the output of the comparison circuit 3 so that, if the comparison circuit 3 generates an over-current detection signal in a steady phase, the comparison circuit 3 continues generating the over-current detection signal for a holding time irrespective of an electric current detected through the detection circuit 2. The holding time and the first breaking time following the holding time constitute a second breaking time. For example, the holding circuit 4 is formed of resistors 41 and 42 (first and second resistors) and a capacitor 43. The resistor 41 is connected between the non-inverting input terminal of the operational amplifier 30 and the negative terminal 82 of the DC power supply 8. The resistor 42 has first and second ends, and the first end is connected to the non-inverting input terminal of the operational amplifier 30. The capacitor 43 is connected between the second end of the resistor 42 and the output terminal of the operational amplifier 30. Accordingly, the holding time is decided by the time constant of the resistors 41 and 42 and the capacitor 43. That is, if the operational amplifier 30 generates an over-current detection signal (a HIGH signal), the over-current detection signal is fed to the capacitor 43 in addition to the control circuit 6, and accordingly the capacitor 43 is charged by the over-current detection signal. In this instance, the voltage obtained by subtracting the voltage across the capacitor 43 from the voltage of the HIGH signal is divided through the resistors 41 and 42, and the voltage across the resistor 41 (a divided voltage) is fed to the non-inverting input terminal of the operational amplifier 30. Therefore, if the voltage across the capacitor 43 is gradually increased by the over-current detection signal and the voltage across the resistor 41 becomes lower than the over-current threshold (the reference voltage), the operational amplifier 30 generates a LOW signal and the capacitor 43 is discharged through the resistors 41 and 42. In short, until the voltage across the resistors 41 reaches the voltage corresponding to the holding time, the operational amplifier 30 continues generating the over-current detection signal. Therefore, the resistors 41 and 42 and the capacitor 43 are set based on the holding time. Since this holding time and the first breaking time constitute a second breaking time, the holding time is decided based on the second breaking time. For example, the second breaking time is decided so that each junction temperature of the FETs 11-14 does not exceed the maximum rating temperature. The second breaking time is decided to, but not limited to, at least 20 times the first breaking time, and the resistors 41 and 42 and the capacitor 43 are set based on the holding time obtained from the decided second breaking time.

The delay circuit 5 is configured to delay (halt) the operation of the holding circuit 4 up to the end of a predetermined delay time from the start of the motor 7. For example, the delay circuit 5 includes a delay switch 51, a RC circuit 52 and a NOT circuit 53. The delay switch 51 is a bipolar transistor, an FET or the like, and connected between the second end of the resistor 42 and the negative terminal 82 of the DC power supply 8. The RC circuit 52 is formed of a resistor 521 and a capacitor 522. The resistor 521 is connected between an input terminal 50 for receiving a start signal (a HIGH signal) and the input terminal of the NOT circuit 53. The capacitor 522 is connected between the junction of the resistor 521 and the NOT circuit 53 and ground. The output terminal of the NOT circuit 53 is connected to a control terminal (e.g., a base or gate terminal) of the delay switch 51. Accordingly, if a start signal is fed to the input terminal 50, the NOT circuit 53 generates a HIGH signal until the voltage across the capacitor 52 reaches or exceeds the threshold voltage of the NOT circuit 53, and subsequently generates a LOW signal. In other words, the NOT circuit 53 generates a HIGH signal up to the end of the delay time decided by the time constant of the RC circuit 52, and subsequently generates a LOW signal. Thus, the delay circuit 5 is configured to turn the delay switch 51 on up to the end of the delay time from the start of the motor 7 and to consequently turn the delay switch 51 off. If the delay switch 51 is turned on, a parallel circuit of the resistors 41 and 42 is connected between the non-inverting input terminal of the operational amplifier 30 and ground, and the capacitor 43 is connected between the output terminal of the operational amplifier 30 and ground. Thereby, the operational amplifier 30 functions as a comparator, and the holding circuit 4 is halted. Herein, the time constant of the RC circuit 52 is set so that the end of the delay time is included in a period of time of a steady phase. For example, the time constant is set based on the specification of the brushless DC motor 7 (e.g., the time until the motor is stably driven, etc.). Preferably, the time constant is a time in the range of 50-100msec, or 1 sec or more.

Accordingly, in a start phase, if an electric current detected through the detection circuit 2 reaches or exceeds the over-current threshold, the control circuit 6 turns the FETs 11-14 off to unenergize them for a first breaking time. Also, in a steady phase, if an electric current detected through the detection circuit 2 reaches or exceeds the over-current threshold, the control circuit 6 turns the FETs 11-14 off to unenergize them for a second breaking time longer than the first breaking time.

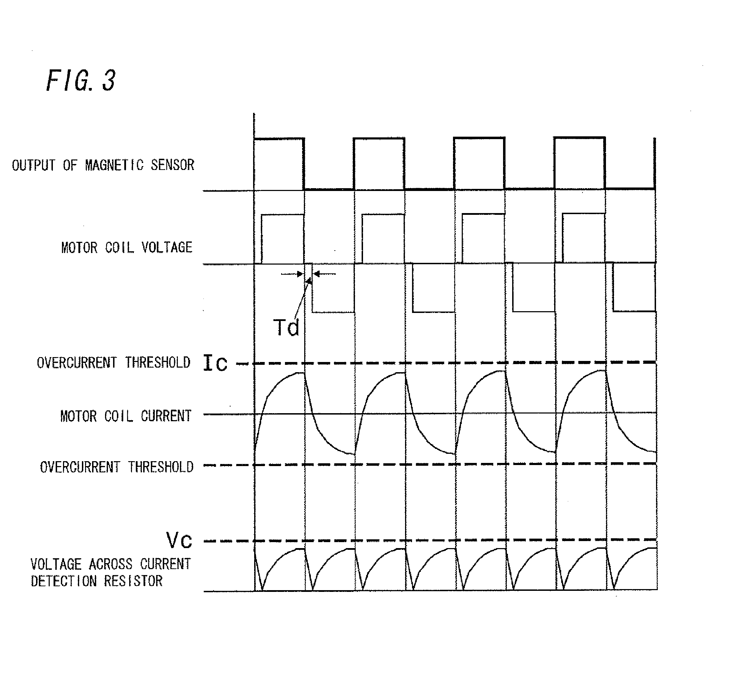

First, the operation of the driver in a steady phase is explained with reference to FIG. 3. In a steady phase, the magnetic sensor 61 generates a rectangular wave signal in response to the rotation of the magnet rotor 73 (positions of magnetic poles). That is, the magnetic sensor 61 alternately generates HIGH and LOW signals.

If the magnetic sensor 61 generates a HIGH signal, LOW and HIGH signals are supplied to the control terminals of the switches 63 and 64, respectively and then the switches 63 and 64 are turned off and on, respectively. If the switch 64 is turned on, ground is connected to the gate terminal of the FET 12, and accordingly the FET 12 is turned off at an ON time point of the switch 64. On the other hand, the FET 11 is turned on after a first breaking time (Td) from an off time point of the switch 63. That is, if the switch 63 is turned off, the control power supply 9 is connected to the gate terminal of the FET 11 through the RC circuit 65. Accordingly, when the voltage across the capacitor 652 in the RC circuit 65 is increased by the time constant to reach or exceed the threshold voltage of the FET 11, the FET 11 is turned on. In short, for a first breaking time, the FET 11-14 are turned off, and thereby unenergized.

If the FET 11 is turned on, the drain terminal of the FET 11 is connected to the negative terminal 82 of the DC power supply 8 and then the voltage of the drain terminal becomes equal to the voltage of the negative terminal 82 (i.e., ground voltage (electrical potential)). The voltage of the gate terminal of the FET 14 also becomes equal to the voltage of the negative terminal 82. Thereby, the FET 14 is turned on, and the voltage of the DC power supply 8 is applied across the motor coil 72 through the FETs 11 and 14.

The magnetic sensor 61 subsequently generates a LOW signal and then HIGH and LOW signals are fed to the control terminals of the switches 63 and 64, respectively. Thereby, the switches 63 and 64 are turned on and off, respectively. If the switch 63 is turned on, ground is connected to the gate terminal of the FET 11, and accordingly the FET 11 is turned off at the on time point of the switch 63. At this point, since the drain terminal of the FET 11 is connected to the positive terminal 81 of the DC power supply 8 through the resistor 16, the voltage of the drain terminal becomes equal to the voltage of the DC power supply 8 and the voltage of the gate terminal of the FET 14 also becomes equal to the voltage of the DC power supply 8. Accordingly, the FET14 is turned off. The RC circuit 66 also delays the turn-on of the FET 12 for a first breaking time (Td) from the point in time the switch 64 is turned off. Therefore, the FETs 11-14 are turned off to be unenergized for the first breaking time.

If the FET 12 is turned on, the drain terminal of the FET 12 is connected to the negative terminal 82 of the DC power supply 8 and then the voltage of the drain terminal becomes equal to the voltage of the negative terminal 82. The voltage of the gate terminal of the FET 13 also becomes equal to the voltage of the negative terminal 82. Thereby, the FET 13 is turned on and the voltage of the DC power supply 8 is applied, as voltage with reverse polarity, across the motor coil 72 through the FETs 12 and 13. That is, the voltage applied across the motor coil 72 through the FETs 12 and 13 has the polarity reverse to the voltage applied through the FETs 11 and 14.

Thus, the combination of the FETs 11 and 14 and the combination of the FETs 12 and 13 are alternately turned on and off by the output of the magnetic sensor 61, and thereby AC voltage (a rectangular wave voltage) is applied across the motor coil 72. Accordingly, alternating magnetic field generates from the stator core 71 and then the magnet rotor 73 is rotated.

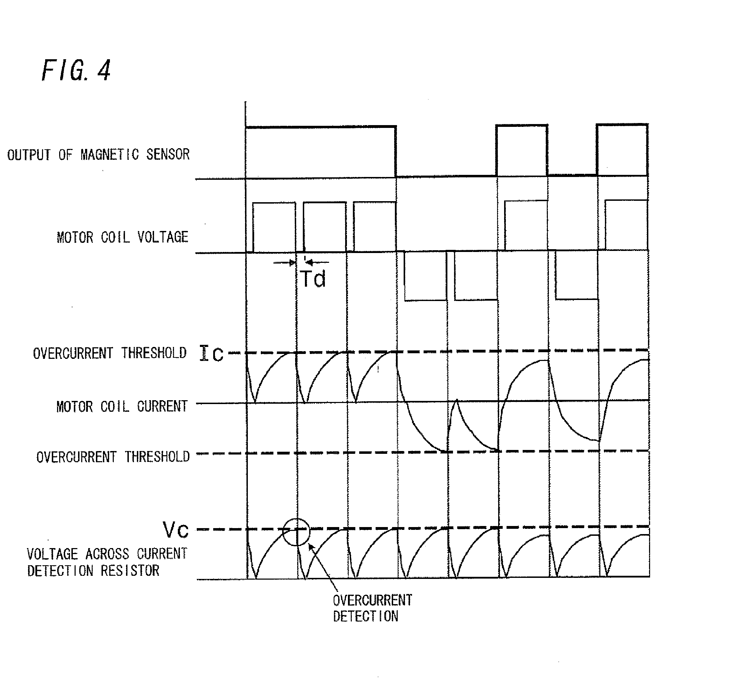

Next, the operation of the driver in a start phase is explained with reference to FIG. 4. If a start signal is fed to the input terminal 50, the delay switch 51 is turned on up to the end of the delay time decided by the delay circuit 5. In the embodiment, the holding circuit 4 is halted at least for the start phase.

In the start phase, until the magnet rotor 73 rotates and then the magnetic sensor 61 generates a rectangular wave signal, the magnetic sensor 61 generates a signal (a HIGH or LOW signal) corresponding to positions of magnetic poles of the magnet rotor 73. According to this signal, the switches 63 and 64 are started, and then an FET 11 or 12 is turned on while the other is turned off. Accordingly, a first combination of the FETs 11 and 12 or a second combination of the FETs 12 and 13 is turned on. If a first or second combination is turned on, the voltage of the DC power supply 8 is applied across the motor coil 72 and accordingly a transient current flows through the motor coil 72 (see "MOTOR COIL CURRENT" in FIG. 4). In the start phase, a large electric current obtained by dividing the voltage of the DC power supply 8 by the resistance component of the motor coil 72 is to flow through the motor coil 72, because large back electromotive force is not generated from the motor coil 72.

If the transient current flows through the current detection resistor 20 via an FET 11 or 12, the transient voltage obtained by multiplying the transient current and the resistance of the resistor 20 generates across the resistor 20. The voltage obtained by subtracting the ON voltage of the diode 21 from the transient voltage is a detection voltage of the detection circuit 2, and the detection voltage is fed to the non-inverting input terminal of the operational amplifier 30. Since the detection voltage corresponds to the transient current, the detection voltage can reach the over-current threshold applied to the inverting input terminal of the operational amplifier 30. If the detection voltage reaches the over-current threshold, the operational amplifier 30 generates an over-current detection signal and supplies the signal substantially to the switches 67 and 68 of the control circuit 6. Thereby, the switches 67 and 68 are turned on.

As soon as the switches 67 and 68 are turned on, the FETs 11-14 are turned off and then the motor coil 72 and the FETs 11-14 are unenergized. The transient current is also cut off. Thereby, the output voltage of the detection circuit 2 becomes lower than the over-current threshold, and the operational amplifier 30 generates a LOW signal to supply the signal to the switches 67 and 68 of the control circuit 6. Consequently, the switches 67 and 68 are turned off, while at the same time a first breaking time (Td) is started.

The switches 67 and 68 are turned off and then a gate terminal of an FET 11 or 12 is connected to the control power supply 9 through an RC circuit 65 or 66, respectively. Accordingly, an FET 11 or 12 is turned on after the first breaking time (Td). If an FET 11 or 12 is turned on, a first or second combination is turned on, respectively and then the voltage of the DC power supply 8 is applied across the motor coil 72.

Thus, whenever a detection voltage reaches the over-current threshold, the driver gradually increases the number of rotations of the motor 7 while turning the FETs 11-14 off to unenergize the motor coil 72 and the FETs 11-14 and then delaying turn-on of an FET 11 or 12 for a first breaking time. Subsequently, if the number of rotations of the motor 7 is increased and then back electromotive force is increased, an electric current flowing through the current detection resistor 20 is reduced and the detection voltage becomes lower than the over-current threshold, so that the operation stage of the driver is shifted to a steady phase. Also, after the delay time decided by the delay circuit 5, the holding circuit 4 is effective (substantially activated).

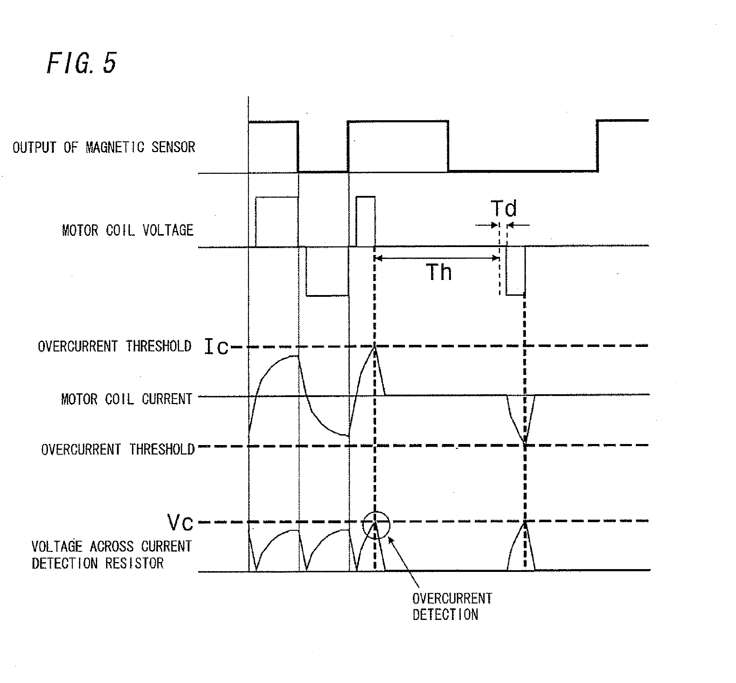

Finally, the operation for countermeasure against overload, of the driver in a steady phase is explained with reference to FIG. 5. In a steady phase, if the driver receives the overload caused by overvoltage of the DC power supply 8 as well as increase of the electric current flowing through the motor coil 72 by increase of load on the motor 7 and motor lock, the FETs 11-14 and the motor coil 72 are exposed to an over-current, which increases each temperature of them. The holding circuit 4 operates to effectively reduce each temperature of the FETs 11-14 and the motor coil 72 that are exposed to an over-current in a steady phase according to an aspect of the present invention.

That is, in the steady phase in which the driver operates as shown in FIG. 3, if the driver receives the overload, the voltage (a detection voltage) across the current detection resistor 20 is to reach the over-current threshold (Ic) applied to the inverting input terminal of the operational amplifier 30 as shown in FIG. 5. If the detection voltage reaches the over-current threshold, the comparison circuit 3 generates an over-current detection signal to supply the signal to the control circuit 6 and the holding circuit 4. Thereby, the switches 67 and 68 are turned on, and then the FETs 11-14 are turned off while at the same time the holding circuit 4 holds the output of the comparison circuit 3 so that the comparison circuit 3 continues generating the over-current detection signal for a holding time (Th). Each temperature of the FETs 11-14 and the motor coil 72 that are exposed to the over-current is reduced by, for example, ambient temperature for the holding time.

If the holding time passes and then the comparison circuit 3 generates a LOW signal, the signal is fed to the control circuit 6. Thereby, the capacitor 43 in the holding circuit 4 is discharged through the resistors 41 and 43, while the switches 67 and 68 are turned off. If the switches 67 and 68 are turned off, an FET 11 or 12 is turned on after a first breaking time and the voltage of the DC power supply 8 is applied across the motor coil 72. That is, after a second breaking time, the voltage of the DC power supply 8 is applied across the motor coil 72.

Thus, the holding circuit 4 operates to effectively lower each temperature of the FETs 11-14 and the motor coil 72 exposed to the over-current until the driver does not receive the overload. In the present embodiment, by an inexpensive and simple configuration that the holding circuit 4 and the delay circuit 5 are added to the comparison circuit 3, it is possible to effectively lower each temperature of the switching elements 11-14 exposed to an over-current. For example, if the second breaking time is at least 20 times as long as the first breaking time, each temperature of the switching elements 11-14 exposed to an over-current can be lowered to the temperature that each calorific value of the elements 11-14 becomes less than one third of each calorific value in the configuration without the holding circuit 4 and the delay circuit 5.

Although the present invention has been described with reference to certain preferred embodiments, numerous modifications and variations can be made by those skilled in the art without departing from the true spirit and scope of this invention.

## Claims

1. A brushless DC motor driver, comprising:
a DC-AC converter circuit that comprises switching elements arranged so as to be energized from a DC power supply to convert DC voltage into AC voltage;
a control circuit configured to control switching of the DC-AC converter circuit to supply a motor coil of a brushless DC motor with the AC voltage for driving the brushless DC motor;
a detection circuit configured to detect an electric current flowing through the motor coil; and
a comparison circuit configured to generate an over-current detection signal if the electric current detected through the detection circuit reaches or exceeds an over-current threshold,
wherein the control circuit is configured to turn all or part of the switching elements off to unenergize the switching elements for a predetermined time if the comparison circuit generates the over-current detection signal,
wherein the control circuit is configured:
to unenergize the switching elements for a first breaking time if the electric current detected through the detection circuit in a start phase reaches or exceeds the over-current threshold; and also
to unenergize the switching elements for a second breaking time longer than the first breaking time if the electric current detected through the detection circuit in a steady phase reaches or exceeds the over-current threshold.

2. The brushless DC motor driver of claim 1,
wherein the comparison circuit is configured to generate the over-current detection signal while the electric current detected through the detection circuit reaches or exceeds the over-current threshold,
wherein the control circuit is configured to unenergize the switching elements for the first breaking time from the end of the over-current detection signal,
wherein the comparison circuit further comprises:
a holding circuit configured to hold the output of the comparison circuit so that the comparison circuit continues generating the over-current detection signal for a holding time irrespective of an electric current detected through the detection circuit if the comparison circuit generates the over-current detection signal in the steady phase, said holding time constituting the second breaking time in combination with the first breaking time; and
a delay circuit configured to delay the operation of the holding circuit up to the end of a predetermined delay time from the start of the brushless DC motor.

3. The brushless DC motor driver of claim 2,
wherein the brushless DC motor further comprises a magnet rotor having magnetic poles,
wherein the control circuit further comprises:
a magnetic sensor configured to generate a rectangular wave signal in response to rotation of the magnet rotor;
first and second drive elements arranged so as to alternately turn on and off first and second switching elements of the switching elements in the DC-AC converter circuit in response to the rectangular wave signal; and
first and second delay circuits configured to delay turn-on of the first and second switching elements through the first and second drive elements for the first breaking time, respectively irrespective of an electric current detected through the detection circuit.

4. The brushless DC motor driver of claim 3,
wherein the DC-AC converter circuit and the detection circuit are connected in series between positive and negative terminals of the DC power supply,
wherein the detection circuit comprises a current detection resistor and is configured to detect an electric current flowing through the motor coil with the current detection resistor to generate a detection voltage,
wherein the comparison circuit comprises an operational amplifier that has first and second input terminals and an output terminal, said operational amplifier being configured to receive the detection voltage and a reference voltage as the over-current threshold via the first and second input terminals, respectively to compare the detection voltage with the over-current threshold,
wherein the holding circuit comprises a first resistor connected between the first input terminal of the operational amplifier and the negative terminal of the DC power supply; a second resistor having first and second ends, said first end being connected to the first input terminal; and a capacitor connected between the second end of the second resistor and the output terminal of the operational amplifier,
wherein the delay circuit of the comparison circuit comprises a delay switch connected between the second end of the second resistor and the negative terminal of the DC power supply, and is configured to turn the delay switch on up to the end of the delay time from the start of the brushless DC motor and to subsequently turn the delay switch off.
